# EUROPEAN PATENT APPLICATION

(11) **EP 4 435 633 A1**
(43) Date of publication of application: **25.09.2024**
(21) Application number: 21968087.3
(22) Date of filing: 14.12.2021
(51) Int. Cl.: G06F 16/95

(54) **LOG OUTPUT DEVICE, LOG OUTPUT METHOD, AND LOG OUTPUT PROGRAM**

(71) Applicant: Nippon Telegraph And Telephone Corporation, Chiyoda-ku Tokyo 100-8116 (JP)
(72) Inventor: YAMANAKA, Yuki, Musashino-shi, Tokyo 180-8585 (JP); TAKIGUCHI, Hiroyoshi, Musashino-shi, Tokyo 180-8585 (JP); SHINOHARA, Masanori, Musashino-shi, Tokyo 180-8585 (JP); NAGAI, Tomohiro, Musashino-shi, Tokyo 180-8585 (JP); WADA, Yasunori, Musashino-shi, Tokyo 180-8585 (JP)
(74) Representative: Hoffmann Eitle
(86) International application number: PCT/JP2021/046125
(87) International publication number: WO 2023/112170

(57) **Abstract**

A log output device (10) includes a generation part (13a) which generates a log message, a calculation part (13b) which performs a hook for a predetermined event relating to the log message and calculates a hash value from the log message for each hook, a providing part (13c) which provides an encrypted digital signature to the calculated hash value, an output part (13d) which outputs a log message and a hash value to which a digital signature is provided, and a verification part (13e) which verifies the integrity of the log message using the log message and the hash value to which the digital signature is provided.

## Description

### [Technical Field]

The present invention relates to a log output device, a log output method, and a log output program.

### [Background Art]

A log file output by a server device or the like is a record of events which occur in the device in chronological order and is a file including information such as an operating system (OS) or an application failure, defect, or warning. When a cyber attack occurs, traces of it are often recorded in log files and securing the log file without being falsified by an attacker is an important security issue.

Here, a particularly important concept is Forward Security in the context of log integrity. Forward security is the concept of ensuring that, even if a device is infected at some point, the integrity of log files output before that point is not affected. As a mechanism to realize this forward security, each time a log is output, a digest with a digital signature for that log is generated sequentially in the Trusted Execution Environment (TEE) and stored with the log file so that the integrity can be verified later (for example, refer to NPL 1).

### [Citation List]

### [Non Patent Literature]

[NPL 1] Riccardo Paccagnella, Pubali Datta, Wajih Ul Hassan, Adam Bates, Christopher W. Fletcher, Andrew Miller, Dave Tian, " Custos: Practical Tamper-Evident Auditing of Operating Systems Using Trusted Execution ", Network and Distributed Systems Security (NDSS) Symposium 2020

### [Summary of Invention]

### [Technical Problem]

However, with the conventional technique described above, it is not possible to effectively output a log file while maintaining the security level. This is because the related art described above is assumed to be implemented by being directly incorporated into an audit application that outputs logs such as auditd and lacks extensibility.

The present invention was made in view of the above, and an object of the present invention is to provide a log output device, a log output method, and a log output program which enable effective log file output while maintaining a security level.

### [Solution to Problem]

In order to solve the above-described problems and achieve the object, a log output device according to the present invention includes a calculation part configured to perform a hook for a predetermined event relating to a log message and calculate a hash value from the log message for each hook, a providing part configured to provide an encrypted digital signature to the hash value, and an output part configured to output the log message and the hash value to which the digital signature is provided.

Also, a log output method performed using a log output device according to the present invention includes a calculation step of performing a hook for a predetermined event relating to a log message and calculating a hash value from the log message for each hook, a providing step of providing an encrypted digital signature to the hash value, and an output step of outputting the log message and the hash value to which the digital signature is provided.

Furthermore, a log output program according to the present invention causes a computer to execute a calculation procedure of performing a hook for a predetermined event relating to a log message and calculating a hash value from the log message for each hook, a providing procedure of providing an encrypted digital signature to the hash value, and an output procedure of outputting the log message and the hash value to which the digital signature is provided.

### [Advantageous Effects of Invention]

The present invention enables effective log file output while maintaining a security level.

### [Brief Description of Drawings]

[Fig. 1] Fig. 1 is a diagram showing a configuration example of a log output system according to a first embodiment.
[Fig. 2] Fig. 2 is a diagram showing an overview of a log output system in the related art.
[Fig. 3] Fig. 3 is a block diagram showing a configuration example of a log output device according to the first embodiment.
[Fig. 4] Fig. 4 is a diagram showing Specific Example 1 of log output processing according to the first embodiment.
[Fig. 5] Fig. 5 is a diagram showing Specific Example 2 of the log output processing according to the first embodiment.
[Fig. 6] Fig. 6 is a diagram showing Specific Example 2 of the log output processing according to the first embodiment.
[Fig. 7] Fig. 7 is a flowchart for describing an example of a flow of the log output processing according to the first embodiment.
[Fig. 8] Fig. 8 is a diagram showing a computer which executes a program.

### [Description of Embodiments]

Embodiments of a log output device, a log output method, and a log output program according to the present invention will be described in detail below on the basis of the drawings. Note that, the present invention is not limited using embodiments which will be described below.

### [First Embodiment]

A configuration of a log output system 100 according to a first embodiment, an overview of a log output system 100-P in the related art, a configuration of a log output device 10, a specific example of log output processing, and a flow of the log output processing will be described below in order. In addition, finally, the effects of this embodiment will be described.

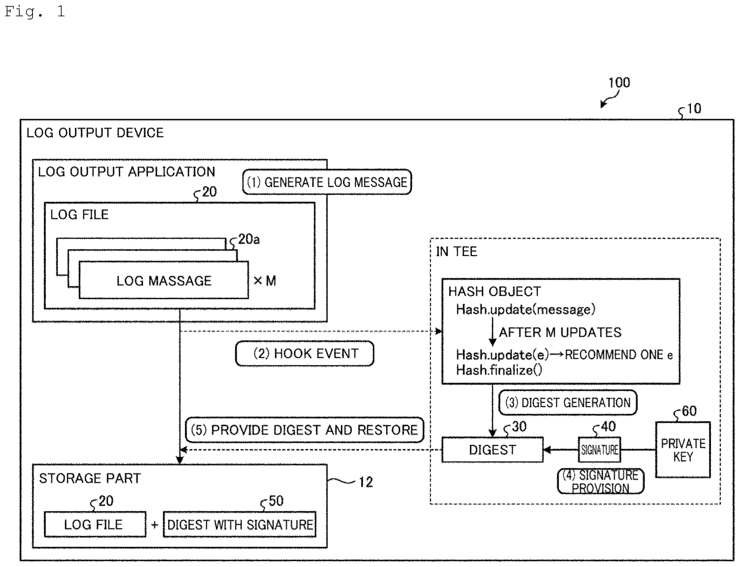

[1. Configuration of Log Output System 100] The configuration of the log output system 100 according to the first embodiment will be described in detail using Fig. 1. Fig. 1 is a diagram showing a configuration example of a log output system according to the first embodiment. An overall configuration example of the log output system 100 will be shown below and then log message generation processing, event hook processing, digest generation processing, digital signature providing processing, log file storage processing, and log file verification processing will be described in this order.

### (1-1. Overall Configuration Example of Log Output System 100)

As shown in Fig. 1, the log output system 100 has a log output device 10. Also, The log output system 100 includes a log file 20, a digest 30, a digital signature 40, a digest 50 with a digital signature, and a private key 60, as data relating to the log output system 100. Furthermore, the log output system 100 includes a log output application, a TEE, and a storage part 12 in the log output device 10. Each configuration of the log output system 100 will be described below.

### (Log Output Device 10)

The log output device 10 is an information processing device realized using a server device, a cloud system, or the like, but is not particularly limited as long as it can execute the log output processing according to this embodiment. For example, the log output device 10 may be a personal computer (PC) owned by a user of a general network, a smart phone, a tablet terminal, or the like. Note that the log output system 100 shown in Fig. 1 may include a plurality of log output devices 10.

### (Log File 20)

The log file 20 is a data file including M log messages (entries written to the log file 20) of log messages 20a.

### (Digest 30)

The digest 30 is a hash value generated from the log file 20 including the log message 20a and the like.

### (Digital Signature 40)

A digital signature 40 is data encrypted with a private key 60. Note that it is also simply written as "signature" as appropriate.

### (Digest 50 with Digital Signature)

A digest 50 with a digital signature is a digest 30 having a digital signature 40 attached thereto.

### (Private Key 60)

A private key 60 is data used when encrypting a digital signature 40.

### (Log Output Application)

The log output application is, for example, an audit application which outputs a log such as auditd, but is not particularly limited as long as it is an application which outputs a log.

### (TEE)

The TEE is a safe execution environment (Secure World) separated from the normal execution environment (Normal World), but is not particularly limited as long as it is a secure environment in which hashing can be safely performed and the private key 60 can be safely held. For example, the log output system 100 can employ a secure environment using a trusted platform module (TPM) or the like.

### (Storage Part 12)

The storage part 12 is a storage medium (storage) in which the log file 20 and the digest 50 with a digital signature are stored. The storage part 12 is installed inside the log output device 10 in the example of Fig. 1, but may be installed outside the log output device 10. Details of the storage part 12 will be described later in [3. Configuration of Log Output device 10] .

### (1-2. Log Message Generation Processing)

First, the log output device 10 uses a log output application to generate a log file 20 including log messages 20a and the like (refer to Fig. 1(1)). Here, the log file 20 is a record of information about events which have occurred in the log output device 10 (OS and application failures, defects, warnings, or the like) in chronological order.

### (1-3. Event Hook Processing)

Subsequently, the log output device 10 hooks a file event (refer to Fig. 1(2)). For example, the log output device 10 hooks a file open event or a file alteration event such as file appending. At this time, the log output device 10 hooks the above file event using an interface for OS which can describe a virtual file system such as Filesystem in Userspace (FUSE) (as appropriate, "virtual file system description interface") and system calls which monitor file system events such as fanotify (as appropriate, "event monitoring system calls"). Details of the event hook processing using FUSE, fanotify, or the like will be described later in [4. Specific Example of Log Output Processing].

### (1-4. Digest Generation Processing)

Subsequently, the log output device 10 generates a digest 30 in the TEE on the basis of the log file 20 including the log message 20a or the like (refer to Fig. 1(3)). For example, the log output device 10 sequentially updates hash values using log messages. In the example of Fig. 1, since the log output device 10 includes M log messages recorded in chronological order, updates (hashing) are performed M times. Also, the log output device 10 performs updating using the block ID, which is the identification information of the block of the log and generates the digest 30. At this time, the log output device 10 performs processing to advance the block ID by one. In the example of Fig. 1, the log output device 10 generates the digest 30 using the block ID "e", which is an arbitrary number and performs processing to count up the block ID to "e+1".

### (1-5. Digital Signature Providing Processing)

On the other hand, the log output device 10 uses the private key 60 to generate a digital signature 40 in the TEE and attaches the digital signature 40 to the digest 30 (refer to Fig. 1(4)). For example, the log output device 10 generates a digital signature 40 by encrypting the digest 30 with a private key 60 held in the TEE and then creates a digest 50 with a digital signature by adding a digital signature 40 to the digest 30.

### (1-6. Log File Storage Processing)

Furthermore, the log output device 10 adds the digest 50 with a digital signature to the log file 20 and stores the log file 20 in the storage part 12 (refer to Fig. 1(5)). At this time, the log output device 10 may store the log file 20 and the digest 50 with a digital signature in a database (not shown).

### (1-7. Log File Verification Processing)

Also, the log output device 10 can verify the integrity of the log file 20, the log message 20a, and the like. At this time, the log output device 10 first verifies the hash value using a public key (not shown) corresponding to the private key 60 used for the digital signature 40, and then further generates a hash value from the log file 20, and finally verifies the integrity of the log file 20 by verifying whether it matches the verified hash value.

As described above, in the log output system 100, by performing the processing in Fig. 1 (1) to (5) above, if the private key 60 in the TEE is not illegally obtained, the log file 20 cannot be tampered with, or even if it is tampered with, a mechanism in which it can be immediately noticed. Furthermore, in the digest generation processing of Fig. 1(3) above, in the log output system 100, it is possible to prevent the past hash value from being reproduced even if the private key 60 were leaked by using a counter value (block ID "e") which is valid only in an environment such as a TEE.

[2. Overview of Log Output System 100-P in Related Art] Here, a difference between the log output system 100-P in the related art and the log output system 100 according to the first embodiment will be described. In the following, the log output system 100-P in the related art will be described and then the log output system 100 according to this embodiment will be described.

### (2-1. Log Output System 100-P in Related Art)

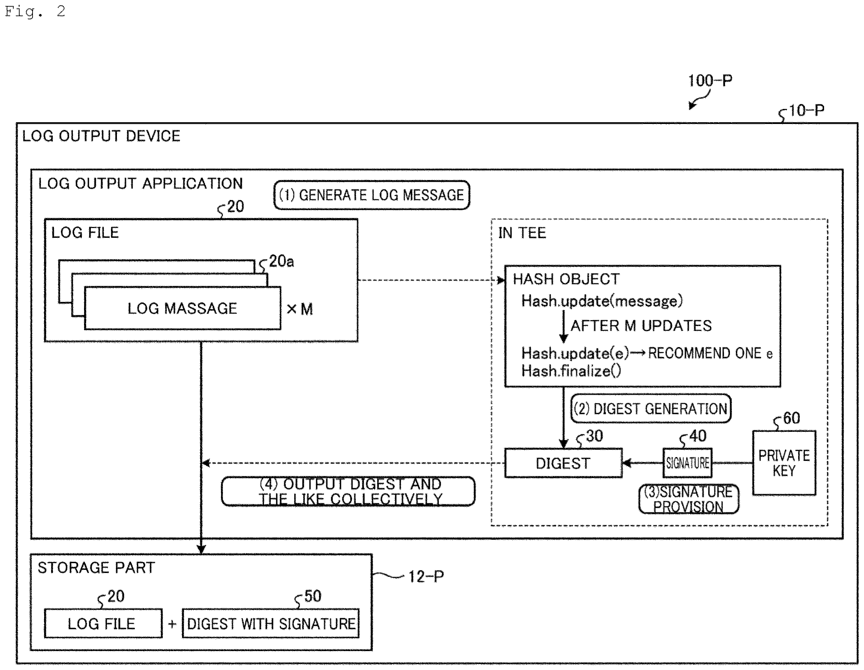

The log output system 100-P in the related art will be described with reference to Fig. 2. Fig. 2 is a diagram showing an overview of a log output system in the related art. Note that descriptions of the same configuration and processing as those of the log output system 100 described above will be omitted.

As shown in Fig. 2, the log output system 100-P in the related art has a log output device 10-P. In the log output system 100-P in the related art, unlike the log output system 100 described above, the process of generating the digest 30 is performed in a secure environment such as a TEE or TPM directly incorporated in the log output application.

The log output device 10-P generates a log file 20 including log messages 20a and the like in a log output application such as auditd (refer to Fig. 2(1)) and transfers the content to a secure environment performed on a secure element such as a TEE and generates a digest 30, which is a hash value corresponding to the log file 20 in the environment (Fig. 2(2)). After that, the log output device 10-P applies a digital signature 40 to the digest 30 with a private key 60 which is safely stored in a TEE or the like and returns it to the log output application (refer to Fig. 2(3)). The log output device 10-P outputs and stores the digest 50 with a digital signature together with the log file 20 in the storage part 12-P, which is a storage (refer to Fig. 2(4)).

Here, in the log output system 100-P in the related art, in order to avoid successful integrity verification not being performed normally if tampering occurs before hash value generation, the log generation process (refer to Fig. 2(1)) and the digest generation process (refer to Fig. 2(2)) are configured to be atomic. That is to say, the log output device 10-P performs generation processing or the like of the digest 30 in a secure environment such as a TEE or TPM which is directly incorporated into a log output application such as auditd. For this reason, since the log output system 100-P in the related art cannot use any log output application, there is a problem of low versatility.

### (2-2. Log Output System 100)

On the other hand, as described above, the log output system 100 shown in Fig. 1 according to the first embodiment uses FUSE, fanotify, or the like to perform hooks such as write events and read events to the log file 20 and generates a digest 30 for each hook. For this reason, the log output system 100 can generate a digest 50 with a digital signature for any application which outputs logs to storage and can prevent log tampering by an attacker.

Also, like the processing of the log output system 100 shown in Fig. 1, even if hash values are generated by hooking output events and appending events using FUSE, fanotify, or the like, a security level equivalent to that of the log output system 100-P in the related art can be ensured. This is because, in order to prevent the above hook, it is necessary to block the operation of applications such as FUSE and fanotify which operate with root privileges, but this is the same as the cost of directly hijacking applications such as auditd which output logs.

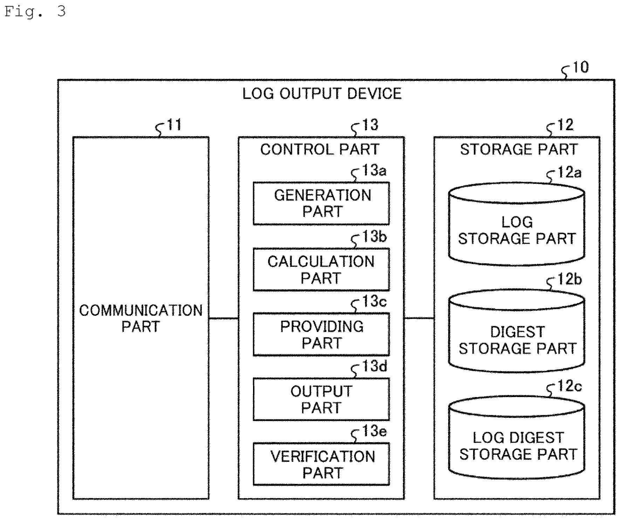

[3. Configuration of Log Output Device 10] The configuration of the log output device 10 according to the first embodiment will be explained in detail with reference to Fig. 3. Fig. 3 is a block diagram showing a configuration example of the log output device according to the first embodiment. The log output device 10 has a communication part 11, a storage part 12, and a control part 13. Note that the log output device 10 may have an input part (for example, a keyboard, a mouse, and the like) which receives various operations from the administrator of the log output device 10 and a display part (for example, a liquid crystal display and the like) for displaying various information.

### (3-1. Communication Part 11)

The communication part 11 manages data communication with other devices. For example, the communication part 11 performs data communication with each communication device. Furthermore, the communication part 11 can perform data communication with an operator's terminal (not shown).

### (3-2. Storage Part 12)

The storage part 12 stores various information referred to when the control part 13 operates and various information acquired when the control part 13 operates. The storage part 12 has a log storage part 12a, a digest storage part 12b, and a log/digest storage part 12c. Here, the storage part 12 is, for example, a random access memory (RAM), a semiconductor memory device such as a flash memory, or a storage device such as a hard disk or an optical disk. Note that, although the storage part 12 is installed inside the log output device 10 in the example of Fig. 3, it may be installed outside the log output device 10, and a plurality of storage parts may be installed.

### (Log Storage Part 12a)

The log storage part 12a stores a log file 20. For example, the log storage part 11a stores a log file 20 including log messages 20a generated using the generation part 13a of the control part 13 and the like.

### (Digest Storage Part 12b)

The digest storage part 12b stores the digest 30. For example, the digest storage part 12b stores a digest 30, which is a hash value calculated using the calculation part 13b of the control part 13.

### (Log Digest Storage Part 12c)

The log/digest storage part 12c stores a log file 20 and a digest 50 with a digital signature. For example, the log/digest storage part 12c stores the log file 20 and the digest 50 with a digital signature output using the output part 13d of the control part 13.

### (3-3. Control Part 13)

The control part 13 controls the log output device 10 as a whole. The control part 13 has a generation part 13a, a calculation part 13b, a providing part 13c, an output part 13d, and a verification part 13e. Here, the control part 15 is, for example, an electronic circuit such as a central processing unit (CPU) or a micro processing unit (MPU) or an integrated circuit such as an application specific integrated circuit (ASIC) or a field programmable gate array (FPGA).

### (Generation Part 13a)

The generation part 13a generates a log message 20a. Also, the generation part 13a generates a log file 20 including log messages 20a and the like. For example, the generation part 13a uses a log output application to generate a log file 20 in which information such as OS or application failures, defects, and warnings are recorded in chronological order. On the other hand, the generation part 13a stores the log file 20 including the generated log message 20a and the like in the log storage part 12a.

### (Calculation Part 13b)

The calculation part 13b performs a hook for a predetermined event relating to the log message 20a, calculates a hash value from the log message 20a, and generates a digest 30 each time the hook is performed. For example, the calculation part 13b calculates the hash value by updating the hash value when a new log message is generated in a predetermined secure element and generates the digest 30. If specific examples are provided, the calculation part 13b calculates a hash value by updating the hash value each time and generates a digest 30 for each predetermined log block if an entry is written to log file 20 in a secure environment such as TEE or TPM.

The calculation part 13b performs a hook for a file open event or a file append event relating to the log message 20a on the basis of an OS interface which describes the virtual file system and generates a digest 30. For example, the calculation part 13b uses a file system described by a virtual file system description interface such as FUSE to perform a hook for a file open event or a file append event relating to the log message 20a, calculates the hash value for each hook, and generates a digest 30.

The calculation part 13b performs a file open event hook relating to the log message 20a using a system call for monitoring file system events, calculate the hash value for each hook, and generates a digest 30. For example, the calculation part 13b uses an event monitoring system call such as fanotify to perform a hook for a file open event relating to the log message 20a, calculates a hash value for each hook, and generates a digest 30.

On the other hand, the calculation part 13b stores the generated digest 30 in the digest storage part 12b.

### (Providing Part 13c)

The providing part 13c provides an encrypted digital signature 40 to the generated digest 30. For example, the providing part 13c provides a digital signature 40 obtained by encrypting the digest 30 using a private key 60 held in a predetermined secure element. That is to say, the providing part 13c acquires the digest 30 generated using the calculation part 13b, generates a digital signature 40 by encrypting the digest 30 using the private key 60, and generates a digest 50 with a digital signature by providing a digital signature 40 to the digest 30.

### (Output Part 13d)

The output part 13d outputs the log file 20 including the log message 20a and the like and the digest 50 with a digital signature. For example, the output part 13d acquires the log file 20 including the log message 20a generated using the generation part 13a and the digest 50 with a digital signature generated using the providing part 13c and stores both the log file 20 and the digest 50 with a digital signature in the log/digest storage part 12c. Note that the output part 13d can also store the log file 20 and the digest 50 with a digital signature in a database or the like outside the log output device 10.

### (Verification Part 13e)

The verification part 13e verifies the integrity of log file 20 using the log file 20 including the log message 20a and the digest 50 with a digital signature. For example, the verification part 13e verifies the digital signature 40 and the digest 30 using the public key corresponding to the private key 60, calculates a hash value from the log file 20, and verifies whether the hash value matches the verified hash value (digest 30). Also, the verification part 13e verifies the integrity of the log file 20 when the file close event relating to the log file 20 is detected.

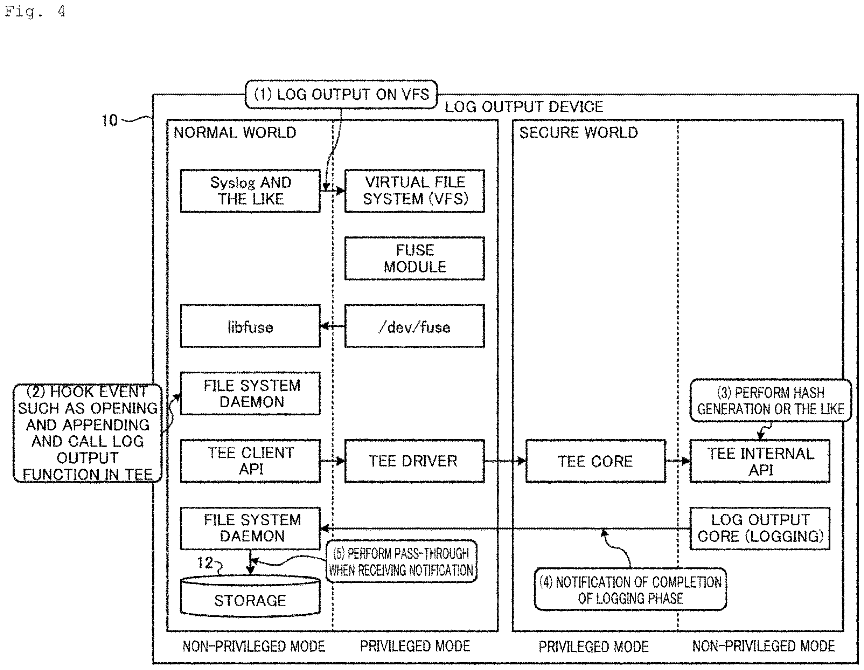

[4. Specific Example of Log Output Processing] A specific example of the log output processing according to the first embodiment will be described with reference to Figs. 4 to 6. In the following, as Specific Example 1, processing of the virtual file system description interface will be described, and as Specific Example 2, processing of an event monitoring system call will be described.

### (4-1. Specific Example 1)

Processing of the log output device 10 based on a virtual file system description interface such as FUSE will be described as Specific Example 1 with reference to Fig. 4. Fig. 4 is a diagram showing Specific Example 1 of the log output processing according to the first embodiment. In the following, although a specific example of adopting TEE as a secure environment and FUSE as a virtual file system description interface will be explained, there are no particular limitations as long as the environment and interface are capable of executing the log output process according to this embodiment.

### (Configuration of Program and the like)

First, the configuration of the programs and the like involved in Specific Example 1 will be described. As shown in Fig. 4, a region in the log output device 10 is divided into a normal world and a secure world and a program and the like operating in a user space and a program and the like operating in a kernel space are shown respectively. Also, the user space programs and the like operate in a non-privileged mode and the kernel space programs and the like operate in a privileged mode.

In the user space of the normal world, "Syslog", "libfuse", "File System Daemon", "TEE client API (Application Programming Interface)", storage (storage part 12) and the like operate. On the other hand, in the normal world kernel space, "Virtual File System (VFS)", "FUSE module (module)", "/dev/fuse", "TEE driver (driver)", and the like operate.

Also, in the secure world user space, "TEE internal API", "Logger Core", and the like operate. On the other hand, in the kernel space of the secure world, "TEE core" and the like operate.

### (Operation of Programs and the like)

The operation of the programs and the like included in Specific Example 1 will be described below. First, the log output device 10 performs a process of outputting the log file 20 on the VFS using Syslog which collects and records the log file 20 (refer to Fig. 4(1)). Subsequently, the log output device 10 performs a process of hooking file open events and file modification events using a FUSE module that is a program module of a FUSE, a device file (/dev/fuse) of the FUSE, libfuse that is a main body of the FUSE, and a file system daemon which can define various processes for the log files 20 and a process of calling the log output function (logger) in the TEE (refer to Fig. 4(2)). Subsequently, the log output device 10 uses the TEE client API, the TEE driver, the TEE core, and the TEE internal API to generate a digest 30 which is a hash value and to provide a digital signature 40 (Fig. 4(3)). Also, the log output device 10 uses the log output core to perform processing of providing a completion notification of the logging phase which is a hashing process (refer to Fig. 4(4)).

Finally, when the log output device 10 receives the above completion notification, the file system daemon passes through the generated digest 50 with digital signature or the like and performs a process of storing it in the storage (Fig. 4(5)).

Here, even if programs such as Syslog, libfuse, and file system daemon are attacked, the log output device 10 detects falsification or deletion of the log files 20 and the digests 30 accumulated before the attack.

### (Advantage of Specific Example 1)

Finally, the advantage of Specific Example 1 will be explained. First, the log output device 10 can directly hook an additional event or the like of an application which outputs a log using an OS interface capable of describing a virtual file system. Second, since the log output device 10 can perform flexible processing such as obtaining diff which is a difference between a current file and a write buffer when hooking a file alteration event and calculating a hash value for the changed portion, the log output device 10 can also generate hash values for non-appendable log files such as utmp and wtmp. Third, the log output device 10 can detect falsification at an early stage by detecting a file close event and performing an integrity check.

### (4-2. Specific Example 2)

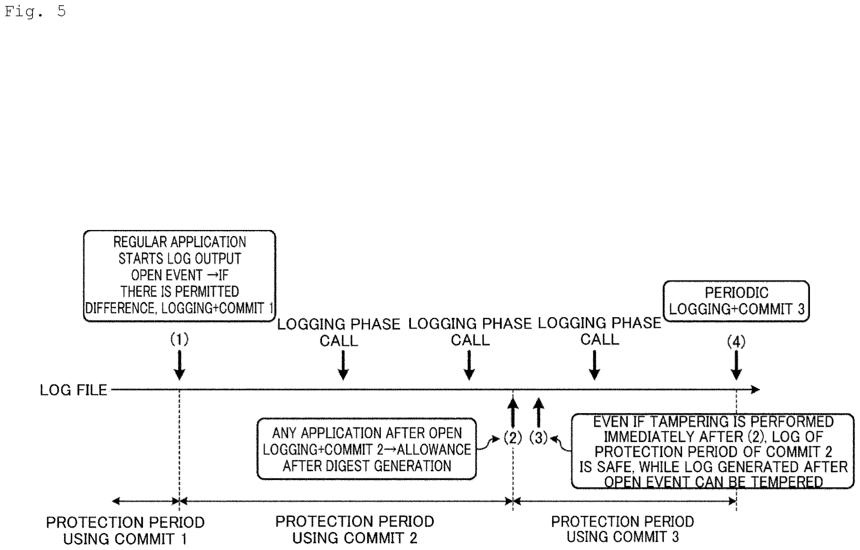

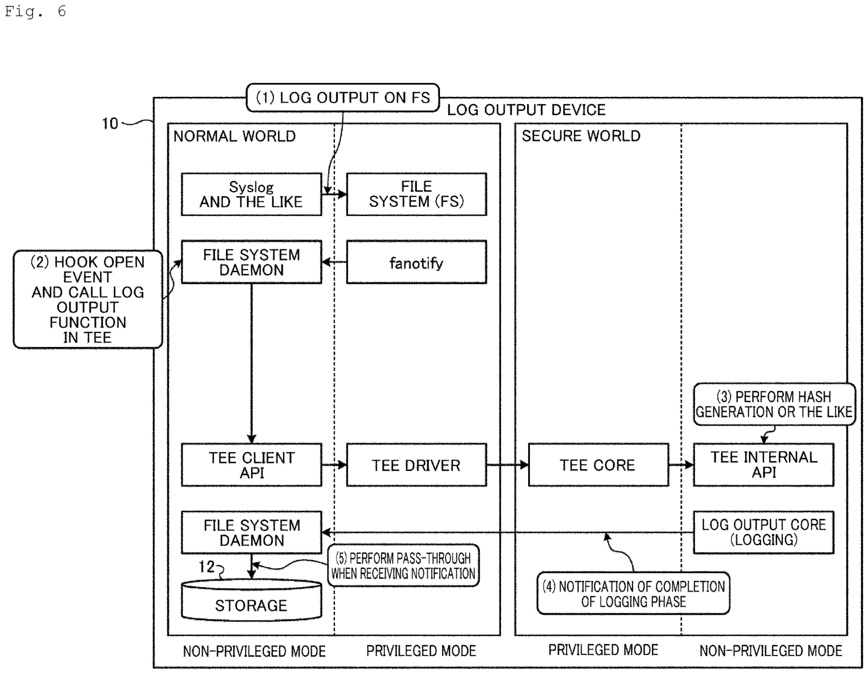

Processing of the log output device 10 using an event monitoring system call such as fanotify will be described as a second specific example with reference to Figs. 5 and 6. Figs. 5 and 6 are diagrams showing Specific Example 2 of log output processing according to the first embodiment. Although a specific example of adopting TEE as a secure environment and fanotify as an event monitoring system call will be explained in the following, there is no particular limitation as long as the environment and system call can execute the log output process according to this embodiment.

### (Overview of Specific Example 2)

First, the overview of Specific Example 2 will be described while comparing Specific Example 2 with Specific Example 1. In Specific Example 2, the log output device 10 does not hook the file append event of the application which outputs the log, but hooks the file open event (FAN_OPEN_PERM) and the file read event (FAN_ACCESS_PERM). At this time, the log output device 10 particularly hooks the file open event and generates the digest 30.

The processing of the log output device 10 will be explained more specifically with reference to Fig. 5. As shown in Fig. 5, the log output device 10 permits file opening when log output processing using a legitimate application starts (refer to Fig. 5(1)). At this time, if there is a difference in the opened log file 20, the log output device 10 transitions to processing of the logging phase and the first commit phase (Commit 1). Here, the commit phase is a process of providing a digital signature 40 to the digest 30 generated in the logging phase and completing hashing. At this time, as shown in Fig. 5, the log file 20 is protected using Commit 1 during the period up to (1) in Fig. 5. That is to say, the above period is a period during which the integrity of the log file 20 is guaranteed using the process of Commit 1.

Also, when a file is opened using an arbitrary application, the log output device 10 hooks the event, transitions to processing of the logging phase and the second commit phase (Commit 2), and permits the above file opening after generating the digest 30 (refer to Fig. 5(2)). That is to say, the log output device 10 can generate a digest 30 by capturing an open event by a third party. At this time, as shown in Fig. 5, the log file 20 is protected using Commit 2 during the period from (1) to (2) in Fig. 5. That is to say, the above period is a period during which the integrity of the log file 20 is guaranteed using the process of Commit 2.

Here, if a third party tampered with the log file 20 immediately after Commit 2 (refer to Fig. 5(3)), although the log file 20 generated in the protection period using Commit 2 above is safe, a third party can tamper with the log file 20 generated after the open event in Fig. 5(2).

On the other hand, the log output device 10 can also transition to the logging phase and commit phase processing periodically. In the example shown in Fig. 5, the log output device 10 transitions to processing of the logging phase and the third commit phase (Commit 3) after Commit 2 and generates a digest 30 (refer to Fig. 5(4)). At this time, as shown in Fig. 5, the log file 20 is protected using Commit 3 during the period from (2) to (4) in Fig. 5. That is to say, the above period is a period during which the integrity of the log file 20 is guaranteed using the process of Commit 3.

Note that the log output device 10 can also periodically call the logging phase, as shown in Fig. 5. For example, the log output device 10 may hold the number of logged lines for each log file and update the number of logged lines after performing the logging phase for that number of lines and beyond. Furthermore, the log output device 10 may recognize the difference using snapshots and perform the logging phase on the difference.

### (Configuration of Program and the like)

The configuration of the programs and the like involved in Specific Example 2 will be described below. As shown in Fig. 6, the region in the log output device 10 is separated into a normal world and a secure world and programs and the like which operate in the user space and programs and the like which operate in the kernel space are respectively shown. Also, the user space programs and the like operate in the non-privileged mode and the kernel space programs and the like operate in the privileged mode.

In the normal world user space, "Syslog", "file system daemon", "TEE client API", a storage (storage part 12), and the like operate. On the other hand, in the normal world kernel space, "File system (FS: File System)", "fanotify", "TEE driver", and the like operate.

Also, in the secure world user space, "TEE Internal API", "Log Output Core", and the like operate. On the other hand, in the secure world kernel space, "TEE core" and the like operate.

### (Operation of Programs and the like)

Subsequently, the operation of the programs and the like involved in Specific Example 2 will be described. First, the log output device 10 performs a process of outputting the log file 20 on the FS by Syslog which collects and records the log file 20 (refer to Fig. 6(1)). Subsequently, the log output device 10 performs the process of hooking a file open event and the process of calling the log output function in the TEE using fanotify and the file system daemon (refer to Fig. 6(2)). Subsequently, the log output device 10 performs a process of generating a digest 30 which is a hash value using the TEE client API, the TEE driver, the TEE core, and the TEE internal API and a process of providing a digital signature 40 (refer to Fig. 6(3)). Also, the log output device 10 uses the log output core to perform processing of providing a completion notification of the logging phase which is a hashing process (refer to Fig. 6(4)). Finally, when the log output device 10 receives the above completion notification, the log output device 10 passes through the generated digest 50 with a digital signature and the like using the file system daemon and performs the process of storing it in the storage (refer to Fig. 6(5)).

Here, even if programs such as Syslog, fanotify, and file system daemon are attacked, the log output device 10 can detect falsification or deletion of the log files 20 and the digests 30 and the like accumulated before the attack.

### (Advantage of Specific Example 2)

Finally, the advantage of Specific Example 2 will be explained. First, the log output device 10 can generate a digest 30 by hooking a file open event by a third party or the like using a system call which monitors file system events. Second, the log output device 10 can detect falsification early by detecting a file close event and confirming the integrity.

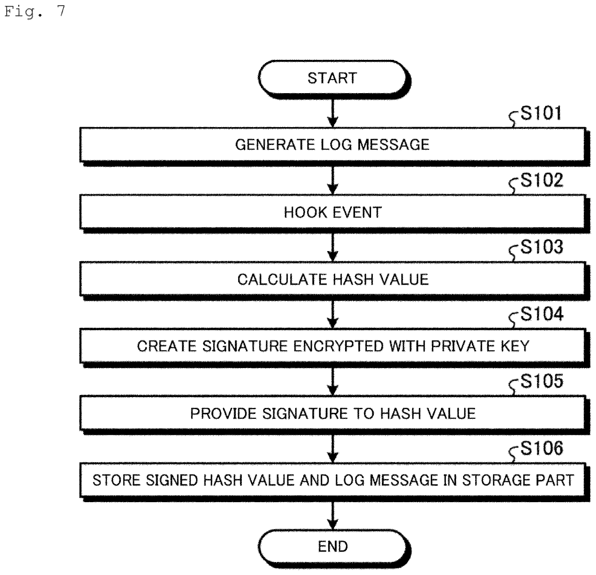

[5. Flow of Log Output Process] The overall flow of log output processing according to the first embodiment will be described in detail with reference to Fig. 7. Fig. 7 is a flowchart for describing an example of the flow of log output processing according to the first embodiment. Note that Steps S101 to S106 which will be described below can also be performed in a different order. Also, some of Steps S101 to S106 which will be described below may be omitted.

First, the generation part 13a generates the log file 20 including the log message 20a and the like (Step S101).

Second, the calculation part 13b hooks the file event of the log file 20 (Step S102).

Third, the calculation part 13b calculates the hash value of the log file 20 and generates the digest 30 (Step S103).

Fourth, the providing part 13c encrypts the digest 30 using the private key 60 to generate the digital signature 40 (Step S104).

Fifth, the providing part 13c provides a digital signature 40 to the digest 30 to generate a digest 50 with a digital signature (Step S105).

Sixth, the output part 13d stores the log file 20 and the digest 50 with a digital signature in the storage part 12 (Step S106) and ends the process. Note that the verification part 13e may verify the integrity of the log file 20 using the log file 20 stored in the storage part 12 and the digest 50 with a digital signature.

[Effects of First Embodiment] First, the log output process according to this embodiment described above performs a hook for a predetermined event relating to a log file 20 including a log message 20a or the like, generate a digest 30 from the log file 20 for each hook, provides an encrypted digital signature 40 to the generated digest 30, and output a log file 20 and a digest 50 with a digital signature. For this reason, in this process, it is possible to effectively output a log file while maintaining the security level.

Second, in the log output process according to the above-described embodiment, in a predetermined secure element, when a new log message is generated, a digest 30 is generated by updating the hash value and a digital signature 40 is provided by encrypting the digest 30 using a private key 60 held in the secure element. For this reason, in this process, it is possible to output log files effectively while maintaining the security level by using TEE, TPM, or the like,.

Third, in the log output process according to this embodiment described above, a file open event or file append event hook is performed on the basis of the virtual file system description interface and the digest 30 is generated for each hook. For this reason, in this process, it is possible to effectively output log files while maintaining the security level by using a virtual file system description interface such as FUSE.

Fourth, in the log output process according to this embodiment described above, an event monitoring system call is used for hooking a file open event and a digest 30 is generated each time the hook is performed. For this reason, in this process, an event monitoring system call such as fanotify is used for enabling effective log file output while maintaining the security level.

Fifth, in the log output process according to this embodiment described above, the integrity of the log file 20 is verified using the log file 20 and the digest 50 with a digital signature. For this reason, in this process, it is possible to output an effective log file while maintaining the security level and to verify the integrity of the output log file.

Sixth, in the log output process according to this embodiment described above, the integrity of the log file 20 is verified when a file close event is detected. For this reason, in this process, it is possible to effectively output a log file while maintaining the security level and to effectively verify the integrity of the output log file.

### [System Configuration and the like]

Each component of each device shown in the drawings according to the above embodiment is functionally conceptual and does not necessarily need to be physically configured as shown in the drawing. That is to say, the specific forms of distribution and integration of each device are not limited to those shown in the figure and all or part of them can be configured to be functionally or physically distributed and integrated in arbitrary units in accordance with various loads and usage conditions. Furthermore, each processing function performed by each device may be implemented in whole or in part by a CPU and a program analyzed and executed by the CPU, or implemented as hardware based on wired logic.

Also, among the processes described in the above embodiments, all or a part of the processes described as being performed automatically may also be performed manually or all or a part of the processes described as being performed manually may be performed automatically by known methods. In addition, information including processing procedures, control procedures, specific names, and various data and parameters shown in the above documents and drawings can be arbitrarily changed unless otherwise specified.

### [Program]

In addition, it is also possible to create a program in which the processing executed by the log output device 10 described in the above embodiment is described in a computer-executable language. In this case, the same effects as those of the above embodiments can be obtained by having the computer execute the program. Furthermore, such a program may be recorded in a computer-readable recording medium and the program recorded in this recording medium may be read and executed by a computer to realize the same processing as in the above embodiments.

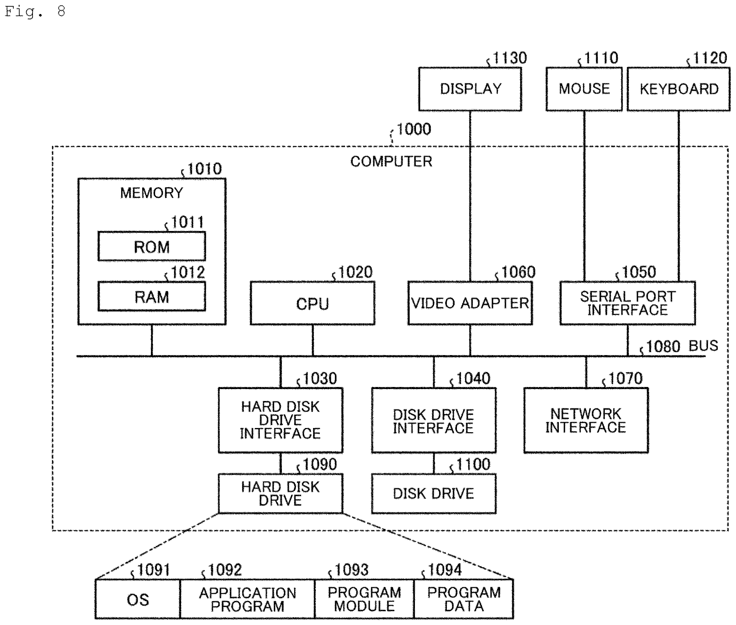

Fig. 8 is a diagram showing a computer which executes a program. As shown in Fig. 8, a computer 1000 has, for example, a memory 1010, a CPU 1020, a hard disk drive interface 1030, a disk drive interface 1040, a serial port interface 1050, a video adapter 1060, and a network interface 1070 and these parts are connected through a bus 1080.

The memory 1010 includes a read only memory (ROM) 1011 and a RAM 1012 as shown in Fig. 8. The ROM 1011 stores, for example, a boot program such as a basic input output system (BIOS). The hard disk drive interface 1030 is connected to the hard disk drive 1090 as shown in Fig. 8. The disk drive interface 1040 is connected to the disk drive 1100 as shown in Fig. 8. For example, a removable storage medium such as a magnetic disk or an optical disk is inserted into the disk drive 1100. The serial port interface 1050 is connected to, for example, a mouse 1110 and a keyboard 1120 as shown in Fig. 8. The video adapter 1060 is connected to, for example, a display 1130 as shown in Fig. 8.

Here, as shown in Fig. 8, the hard disk drive 1090 stores, for example, an OS 1091, an application program 1092, a program module 1093, and program data 1094. That is to say, the above program is stored in, for example, the hard disk drive 1090 as a program module in which instructions to be executed by the computer 1000 are described.

Also, various data described in the above embodiments are stored as, for example, program data in the memory 1010 or the hard disk drive 1090. In addition, the CPU 1020 reads a program module 1093 and program data 1094 stored in the memory 1010 and the hard disk drive 1090 to the RAM 1012 as necessary and executes various processing procedures.

Note that the program module 1093 and the program data 1094 relating to the program are not limited to being stored in the hard disk drive 1090, may be stored in, for example, a removable storage medium, and may be read using the CPU 1020 via a disk drive or the like. Alternatively, the program module 1093 and the program data 1094 relating to the program may be stored in another computer connected over a network (local area network (LAN), wide area network (WAN), or the like) and may be read using the CPU 1020 via a network interface 1070.

The above-described embodiments and modifications thereof are included in the scope of the invention described in the claims and their equivalents, as well as in the technology disclosed by the present application.

### [Reference Signs List]

- 10, 10-P: Log output device
- 11: Communication part
- 12, 12-P: Storage part
- 12a: Log storage part
- 12b: Digest storage port
- 12c: Log digest storage part
- 13: Control part
- 13a: Generation part
- 13b: Calculation part
- 13c: Providing part
- 13d: Output part
- 13e: Verification part
- 20: Log file
- 20a: Log message
- 30: Digest
- 40: Digital signature
- 50: Digest with digital signature
- 60: Private key
- 100: Log output system

## Claims

1. A log output device comprising:
a calculation part configured to perform a hook for a predetermined event relating to a log message and calculate a hash value from the log message for each hook;
a providing part configured to provide an encrypted digital signature to the hash value; and
an output part configured to output the log message and the hash value to which the digital signature is provided.

2. The log output device according to claim 1, wherein the calculation part calculates the hash value by updating a hash value when the log message is newly generated in a predetermined secure element, and
the providing part provides the digital signature obtained by encrypting the hash value using a private key held in the secure element.

3. The log output device according to claim 1 or 2, wherein the calculation part performs a hook for a file open event or a file append event relating to the log message based on an operating system (OS) interface which describes a virtual file system and calculates the hash value for each hook.

4. The log output device according to any one of claims 1 to 3, wherein the calculation part uses a system call for monitoring file system events to perform a hook for a file open event relating to the log message and calculates the hash value for each hook.

5. The log output device according to any one of claims 1 to 4, further including:
a verification part configured to verify integrity of the log message using the log message and the hash value to which the digital signature is provided.

6. The log output device according to claim 5, wherein the verification part verifies integrity of the log message when detecting a file close event relating to the log message.

7. A log output method performed using a log output device, comprising:
a calculation step of performing a hook for a predetermined event relating to a log message and calculating a hash value from the log message for each hook;
a providing step of providing an encrypted digital signature to the hash value; and
an output step of outputting the log message and the hash value to which the digital signature is provided.

8. A log output program that causes a computer to execute:
a calculation procedure of performing a hook for a predetermined event relating to a log message and calculating a hash value from the log message for each hook;
a providing procedure of providing an encrypted digital signature to the hash value; and
an output procedure of outputting the log message and the hash value to which the digital signature is provided.
